# EUROPÄISCHE PATENTSCHRIFT

(11) **EP 1 944 309 B1**
(45) Veröffentlichungstag und Bekanntmachung des Hinweises auf die Patenterteilung: **15.09.2010**
(21) Anmeldenummer: 08004334.2
(22) Anmeldetag: 25.09.2003
(51) Int. Cl.: C07F 15/00

(54) **Rhodium- und Iridium-Komplexe**
Rhodium and iridium complexes
Complexes de rhodium et d'iridium

(30) Priorität: 26.10.2002 DE 10249926
(43) Veröffentlichungstag der Anmeldung: 16.07.2008
(62) Teilanmeldung aus: 03753454.2
(73) Patentinhaber: Merck Patent GmbH, 64293 Darmstadt (DE)
(72) Erfinder: Stössel, Philipp, Dr., 60487 Frankfurt (DE); Spreitzer, Hubert, Dr., 68519 Viernheim (DE); Bach, Ingrid, Dr., 65719 Hofheim (DE)

(56) Entgegenhaltungen:
- WO-A-02/060910

## Beschreibung

Metallorganische Verbindungen - speziell Verbindungen der d⁸-Metalle - werden in naher Zukunft als Wirkkomponenten (= Funktionsmaterialien) in einer Reihe von verschiedenartigen Anwendungen, die im weitesten Sinne der Elektronik-industrie zugerechnet werden können, Einsatz als funktionelle Komponenten finden.

Bei den auf organischen Komponenten basierenden Organischen-Elektrolumineszenz-Vorrichtungen (allg. Beschreibung des Aufbaus vgl. US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln. Eine Entwicklung hierzu, die sich in den letzten Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, 1999, 75, 4-6].

Aus theoretischen Spin-statistischen Gründen ist unter Verwendung metall-organischer Verbindungen als Phosphoreszenz-Emittern eine bis zu vierfache Energie- und Leistungseffizienz möglich. Ob sich diese neue Entwicklung durchsetzten wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.

Daneben muß der effiziente chemische Zugang zu den entsprechenden Organo-Metall-Verbindungen gegeben sein. Von besonderem Interesse sind dabei Organo-Rhodium- und Iridium-Verbindungen. Bei diesen ist vor allem unter Berück-sichtigung des Rhodium- bzw. des Iridiumpreises von maßgebender Bedeutung, dass hier ein effizienter Zugang zu entsprechenden Derivaten ermöglicht wird.

Mono-, Di-, Tri-, Tetra- und -Hexa-Nitro-funktionalisierte bis- und tris-orthometallierte Organo-Rhodium- und Organo-Iridium-Verbindungen [gemäß Verbindungen (1) bis (32) bzw. (1a) bis (8a)], die Gegenstand der vorliegenden Erfindung sind, werden zentrale Schlüsselbausteine zur Erzeugung hocheffizienter Triplett-Emitter sein, da die Nitrofunktion mit Hilfe von gängigen, in der Literatur beschriebenen Methoden in eine Vielzahl von Funktionen (z.B. die Amino-, Nitroso-, Hydroxylamino-, Azo- und die Azoxy-Funktion) umgewandelt werden kann. Damit ist nicht nur der kovalente Einbau dieser aktiven, lichtemittierenden Zentren in eine Vielzahl von Polymeren möglich, sondern auch das Maßschneidern der optoelektronischen Eigenschaften dieser Bausteine. So führen typische Reduktionsreaktionen ausgehend von den Nitroverbindungen zu den oben genannten Amino-, Nitroso-, Hydroxylamino-, Azo- und die Azoxy-Verbindungen, die dann unter C-N-Verknüpfungsreaktionen (z. B. Iminbildung oder Hartwig-Buchwald-Kopplung) entweder weiter funktionalisiert werden können, oder auch als (Co)monomere bei der Darstellung von entsprechenden Polymeren verwendet werden können.

Mono-, Di-, Tri-, Tetra- und Hexa-Nitro-funktionalisierte bis- und trisorthometallierte Organo-Rhodium- und Organo-Iridium-Verbindungen sind bisher in der Literatur nicht beschrieben worden, ihre effiziente Darstellung und Verfügbarkeit als Reinstoffe ist aber für verschiedene elektro-optische Anwendungen von großer Bedeutung.

Auch wenn die obigen Ausführungen hauptsächlich einen Einsatz der erfindungsgemäßen Mono-, Di-, Tri-, Tetra- und -Hexa-Nitrofunktionalisierten bis- und tris-orthometallierten Organo-Rhodium- und Organo-Iridium-Verbindungen in OLED Vorrichtungen beschreiben, sei darauf hingewiesen, dass diese Verbindungen ebenfalls sehr gut in folgenden Vorrichtungen Verwendung finden können:
1. Verwendung in photovoltaischen Vorrichtungen, wie organischen Photodetektoren oder organischen Solarzellen, z.B. als Elektronenakzeptor- bzw. -transportmaterial.
2. Verwendung in organischen integrierten Schaltungen (O-ICs).
3. Verwendung in organischen Feld-Effekt-Transistoren (OFETs).
4. Verwendung in organischen Dünnfilmtransistoren (OTFTs = Organic Thin Film Transistor).
5. Verwendung in Organischen-Feststofflasern.

Als nächstliegender Stand der Technik zur Synthese der Nitroverbindungen (1) bis (32) kann die Nitrierung von neutralen Ruthenium(II)- bzw. Osmium(II)komplexen, die neben dem orthometallierten 2-Phenylpyridin- bzw. 2-(1'-naphthyl)pyridin- bzw. 2-Phenylchinolin-Liganden noch weitere einzähninge Liganden tragen, gesehen werden [A. M. Clark, C. E. F. Rickard, W. R. Roper, L. J. Wright Organometallics. 1999, 18, 2813-2820 und A. M. Clark, C. E. F. Rickard, W. R. Roper, L. J. Wright J. Organomet. Chem., 2000, 598, 262-275].

Als Nitrierungsagens wird Kupfer(II)nitrat in Essigsäureanhydrid verwendet. Nach chromatographischer Reinigung werden die entsprechenden, nitrierten Produkte in Ausbeuten von 10% bis 40% - in Einzelfällen bis zu 87% - erhalten.

Diese beiden Stellen weisen folgende Nachteile auf:
(1) Es wird nur die Derivatisierung von Ru- oder Os-Komplexen, nicht aber diejenige von Rh- oder Ir-Verbindungen beschrieben.
(2) Es wird keine sinnvolle Lehre erteilt, wie man - beim Vorliegen von mehreren substituierbaren Stellen - gezielt zu den gewünschten Mono- oder Di- oder Tri-, Tetra- oder Hexa-funktionalisierten Verbindungen gelangt, da in beiden Fällen jeweils nur eine Nitrierung in para- bzw. ortho-Stellung zum Metallatom pro Komplex-Molekül möglich ist.

Dagegen ist die Mono-, Di-, Tri-, Tetra- und Hexa-Nitrierung von bis- und tris-orthometallierten Organo-Rhodium- und Organo-Iridium-Verbindungen in der Literatur bisher nicht beschrieben worden.

Es wurde nun überraschend gefunden, dass die neuen Verbindungen (1) bis (32) - gemäß Schemata 1, 2, 3 und 4 - ausgehend von den bis- bzw. tris-orthometallierten Organo-Rhodium bzw. Organo-Iridium-Verbindungen (33) bis (64) mit einem Nitrierungsagens, unter geeigneter Wahl des stöchiometrischen Verhältnisses des entsprechenden Nitrierungsagens zu den Verbindungen (33) bis (64) sowie unter geeigneter Wahl der Reaktionsparameter wie Reaktionstemperatur, Reaktions-medium, Konzentration und Reaktionszeiten reproduzierbar in etwa 70 - 98 % iger Ausbeute, ohne Verwendung chromatographischer Reinigungsverfahren, gegebenenfalls nach Umkristallisation, in Reinheiten von > 99 % nach NMR bzw. HPLC erhalten werden (siehe Beispiel 1, 2 und 3).

Die Darstellung der Ausgangsverbindungen (33) bis (64) kann zum Teil nach gängigen Literaturmethoden aber insbesondere auch nach den offengelegten bzw. die nicht offengelegten Anmeldung WO 02/060910, DE 10223337.3, WO 02/068435, DE 10155064.2, DE 10223337.3, DE 10215010.9 und DE 10238903.9 erfolgen.

Das oben beschriebene Verfahren zeichnet sich durch drei Eigenschaften besonders aus, die in dieser Form bisher nicht in der Literatur beschrieben wurden:
Erstens ist die selektive Mono-, Di-, Tri-, Tetra- und Hexa-Nitrierung von bis - und tris-orthometallierten Rhodium- und Iridiumverbindungen unerwartet und in dieser Form nicht bekannt. Vermutlich resultiert sie aus der Aktivierung, die die zum Rhodium- bzw. Iridium-Atom para- bzw. orthoständige Position(en) am koordinierten Phenylring durch dieses erfährt.
Die unerwartet hohe Aktivität dieser Positionen gegenüber einer elektrophilen Substitution, hier der Nitrierung, wird durch den Einsatz milder Nitrierungsagentien gezielt ausgenutzt. Zusätzlich findet man eine hohe Selektivität der Nitrierung der zum Metall para-ständigen Position im Vergleich zur ebenfalls möglichen ortho-Substitution, d.h. in einem gegebenen Molekül werden stets erst alle para-Positionen nitriert, bevor unter geeigneten Bedingungen, die Nitrierung in der ortho-Positionen erfolgt.

Zweitens ist der hohe erzielte Umsatz, der sich in den reproduzierbar sehr guten Ausbeuten an isoliertem Produkt widerspiegelt, unerwartet und einzigartig für die Nitrierung von orthometallierten Liganden, gebunden an Metalle der 9ten Gruppe.

Drittens fallen die erhaltenen Verbindungen - gegebenenfalls nach Umkristallisation , aber ohne aufwendige chromatographische Reinigung, in sehr guten Reinheiten von > 99 % nach NMR bzw. HPLC an. Dies ist für die Verwendung in opto-elektronischen Bauelementen, bzw. der Benutzung als Zwischenprodukte für die Darstellung entsprechender Verbindungen essentiell.

Wie oben geschildert, sind die erfindungsgemäßen Verbindungen nicht vorbeschrieben und damit neu.

Gegenstand der vorliegenden Erfindung sind die tris-orthometallierten Verbindungen (2) und (4) gemäß Schema 1, 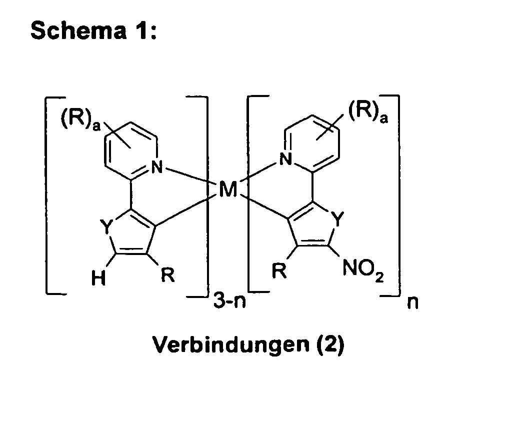 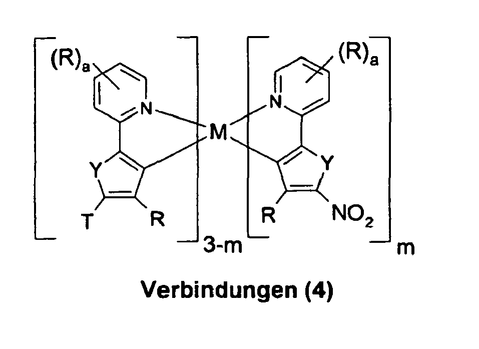 wobei die Symbole und Indizes folgende Bedeutung haben:
- M: Rh, Ir;
- Y: O, S, Se, NR¹;
- R: ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹ - ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- T: ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: ist gleich oder verschieden bei jedem Auftreten, H oder ein aliphatischer oder aromatischer Kohlenwasserstoffrest mit 1 bis 20 C-Atomen;
- a: ist 0, 1, 2, 3 oder 4, bevorzugt 0, 1 oder 2;
- b: ist 0, 1, 2 oder 3, bevorzugt 0 oder 1;
- c: ist 0, 1 oder 2;
- m: ist 1 oder 2;
- n: ist 1, 2 oder 3.

Bei den Verbindungen (2) und (4) sind die homoleptischen Verbindungen bevorzugt.

Eine weitere Ausführungsform der Erfindung sind solche Rh- bzw. Irkomplexe, die gleichzeitig Liganden vom Typ Phenylpyridin und solche von Verbindungen (2) aufweisen, d.h. gemischte Ligandensysteme. Diese werden durch die Verbindungen (2a) und (4a) gemäß Schema 2 beschrieben: 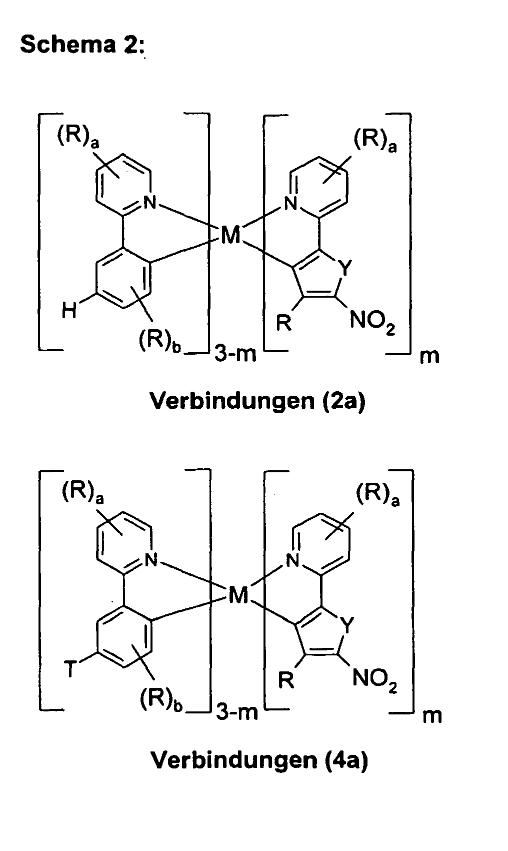 wobei die Symbole und Indizes die unter den Verbindungen (2) und (4) genannten Bedeutungen haben.

Ebenfalls Gegenstand der vorliegenden Erfindung sind die heteroleptischen, bis-orthometallierten Verbindungen (10) und (12) gemäß Schema 3, 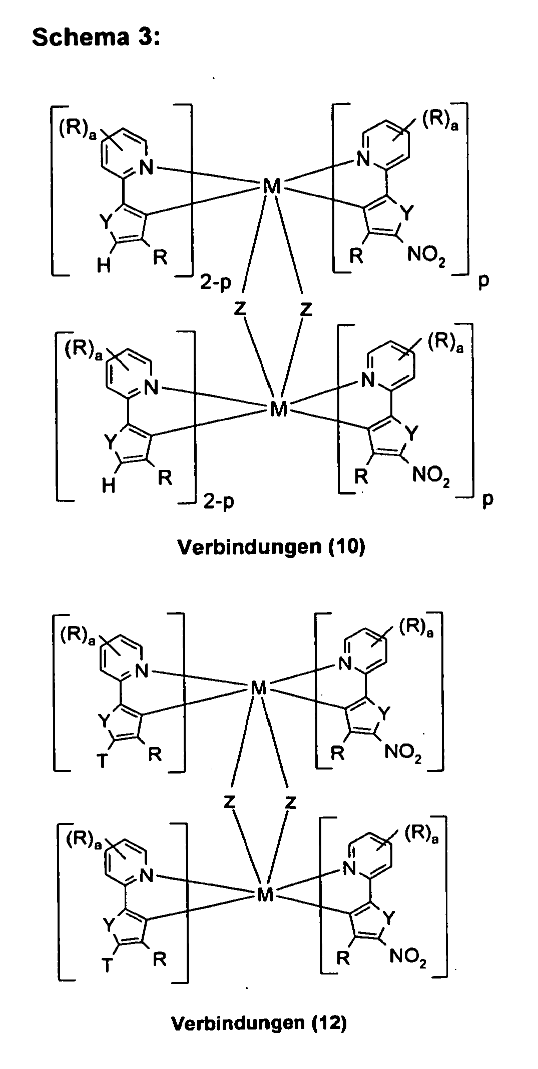 wobei die Symbole und Indizes folgende Bedeutung haben:
- M: Rh, Ir;
- Y: O, S, Se, NR¹;
- Z: ist gleich F, Cl, Br, I, O-R¹, S-R¹, N(R¹)₂; Alkoxygruppe mit 1 bis 20 C-Atomen, wobei ein oder mehrere nicht benachbarte CH₂-Gruppen durch -O-, -SiR¹₂-, -S-, -NR¹- oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- T: ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: ist gleich oder verschieden bei jedem Auftreten H oder ein aliphatischer oder aromatischer Kohlenwasserstoffrest mit 1 bis 20 C-Atomen,
- a: ist 0, 1, 2, 3 oder 4, bevorzugt 0, 1 oder 2;
- b: ist 0, 1, 2 oder 3, bevorzugt 0 oder 1;
- c: ist 0, 1 oder 2;
- p: ist 1 oder 2.
- p: ist 1 oder 2.

Ebenfalls Gegenstand der vorliegenden Erfindung sind die heteroleptischen, bis-orthometallierten Verbindungen (18), (20), (22) und (24) gemäß Schema 4: 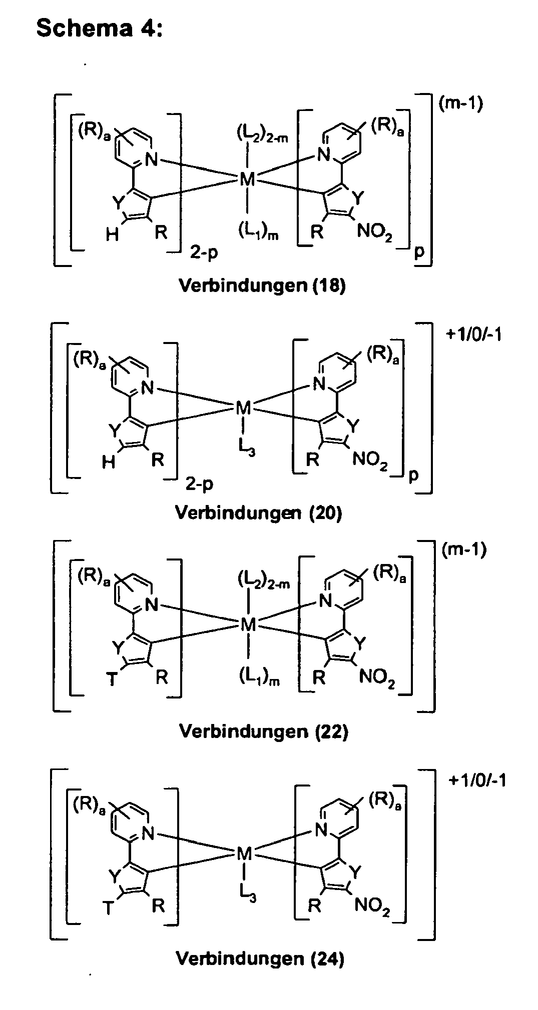 wobei die Symbole und Indizes folgende Bedeutung haben:
- M: Rh, Ir;
- Y: O, S, Se, NR¹;
- R: ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- T: ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: ist gleich oder verschieden bei jedem Auftreten H oder ein aliphatischer oder aromatischer Kohlenwasserstoffrest mit 1 bis 20 C-Atomen;
- L₁: ist ein neutraler, einzähniger Ligand;
- L₂: ist ein monoanionischer, einzähniger Ligand;
- L₃: ist ein neutraler oder mono- oder dianionischer zweizähniger Ligand;
- a: ist 0,1,2,3 oder 4, bevorzugt 0, 1 oder 2;
- b: ist 0, 1, 2 oder 3, bevorzugt 0 oder 1;
- m: ist 0, 1 oder 2;
- p: ist 1 oder 2.

Erfindungsgemäße neutrale, einzähnige Liganden L₁ sind Kohlenmonoxid, Isonitrile wie z. B. *tert*-Butyl-isonitril, Cyclohexylisonitril, Adamantylisonitril, Amine wie z. B. Trimethylamin, Triethylamin, Morpholin, Phosphine wie z. B. Trifluorphosphin, Trimethylphosphin, Tricyclohexylphosphin, Tri-*tert-*butylphosphin, Triphenylphosphin, Tris(pentafluorphenyl)phosphin, Phosphite wie z. B. Trimethylphosphit, Triethylphosphit, Arsine wie z. B. Trifluorarsin, Trimethylarsin, Tricyclohexylarsin, Tri-*tert*-butylarsin, Triphenylarsinin, Tris(pentafluorphenyl)arsin, Stibine wie z.B. Trifluorstibin, Trimethylstibin, Tricyclohexylstibin, Tri-*tert*-butylstibin, Triphenylstibin, Tris(pentafluorphenyl)stibin und stickstoffhaltige Heterocyclen wie z. B. Pyridin, Pyridazin, Pyrazin, Triazin.

Erfindungsgemäße monoanionische, einzähnige Liganden L₂ sind die Halogenide F, Cl, Br, I und Cyanid, Cyanat, Iso-cyanat, Thiocyanat, Iso-thiocyanat, Alkoholate wie z.B. Methanolat, Ethanolat, Propanolat, *iso-*Propanolat, *tert-*Butylat, Phenolat, Thioalkoholate wie z.B. Methanthiolat, Ethanthiolat, Propanthiolat, *iso-*Propanthiolat, *tert*-Thiobutylat, Thiophenolat, Amide wie z. B. Dimethylamid, Diethylamid, Di-*iso*-propylamid, Morpholid, Carboxylate wie z. B. Acetat, Trifluoracetat, Propionat, Benzoat und anionische, stickstoffhaltige Heterocyclen wie Pyrrolid, Imidazolid, Pyrazolid.

Erfindungsgemäße neutrale oder mono- oder dianionische zweizähnige Liganden L₃ sind Diamine wie z. B. Ethylendiamin, N,N,N',N'-Tetramethylethylendiamin, Propylendiamin, N,N,N',N'-Tetramethylpropylendiamin, cis- oder trans-Diaminocyclohexan, cis-, trans-N,N,N',N'-Tetramethyldiamino-cyclohexan, Imine wie z.B. 2[(1-(Phenylimino)ethyl]pyridin, 2[(1-(2-Methylphenylimino)ethyl]pyridin, 2[(1-(2,6-Di-*iso*-propylphenylimino)ethyl]pyridin, 2[(1-(Methylimino)ethyl]pyridin, 2[(1-(ethylimino)ethyl]pyridin, 2[(1-(*Iso-*Propylimino)ethyl]pyridin, 2[(1-(*Tert*-Butylimino)ethyl]pyridin, Dimine wie z. B. 1,2-Bis(methylimino)ethan, 1,2-Bis(ethylimino)ethan, 1,2-Bis(*iso-*propylimino)ethan, 1,2-Bis(*tert*-butylimino)ethan, 2,3-Bis(methylimino)-butan, 2,3-Bis(ethylimino)butan, 2,3-Bis(*iso*-propylimino)butan, 2,3-Bis(*tert-*z.B. 1,2-Bis(methylimino)ethan, 1,2-Bis(ethylimino)ethan, 1,2-Bis(*iso-*propylimino)ethan, 1,2-Bis(*tert*-butylimino)ethan, 2,3-Bis(methylimino)butan, 2,3-Bis(ethylimino)butan, 2,3-Bis(*iso*-propylimino)butan, 2,3-Bis(*tert*-butylimino)butan, 1,2-Bis(phenylimino)ethan, 1,2-Bis(2-methylphenylimino)ethan, 1,2-Bis(2,6-di-*iso*-propylphenylimino)ethan, 1,2-Bis(2,6-di-*tert-*butylphenylimino)ethan, 2,3-Bis(phenylimino)butan, 2,3-Bis(2-methylphenylimino)butan, 2,3-Bis(2,6-di-iso-propylphenylimino)butan, 2,3-Bis-(2,6-di-*tert*-butylphenylimino)butan, Heterocyclen enthaltend zwei Stickstoffatome wie z.B. 2,2'-Bipyridin, o-Phenanthrolin, Diphosphine wie z.B. Bis-diphenylphosphinomethan, Bis-diphenylphosphinoethan, Bis(diphenyl-phosphino)propan, wie Bis(dimethylphosphino)methan, wie Bis(dimethylphosphino)ethan, Bis(dimethylphosphino)propan, wie Bis(diethylphosphino)methan, Bis(diethylphosphino)ethan, Bis(diethylphosphino)-propan, Bis(di-*tert*-butylphosphino)methan, wie Bis(di-*tert*-butylphosphino)-ethan, Bis(*tert-*butylphosphino)propan, 1,3-Diketonate abgeleitet von 1,3-Diketonen wie z.B. Acetylaceton, Benzoylaceton, 1,5-Diphenylacetylaceton, Dibenzolymethan, Bis(1,1,1-tri-fluoracetyl)methan, 3-Ketonate abgeleitet von 3-Ketoestern, wie z.B. Acetessigsäureethylester, Carboxylate abgeleitet von Aminocarbonsäuren, wie z.B. Pyridin-2-carbonsäure, Chinolin-2-carbonsäure, Glycin, Dimethylglycin, Alanin, Dimethylaminoalanin, Salicyliminate abgeleitet von Salicyliminen, wie z.B. Methylsalicylimin, Ethylsalicylimin, Phenylsalicylimin, Dialkoholate abgeleitet von Dialkoholen, wie z.B. Ethylenglykol, 1,3-Propylenglykol, Dithiolate abgeleitet von Dithiolen wie z.B. 1,2-Ethylendithiol, 1,3-Propylendithiol.

Die erfindungsgemäßen Verbindungen können durch Umsetzung der Verbindungen (34), (36), (44), (46), (50), (52), (54) und (56) gemäß Schema 5 hergestellt werden: 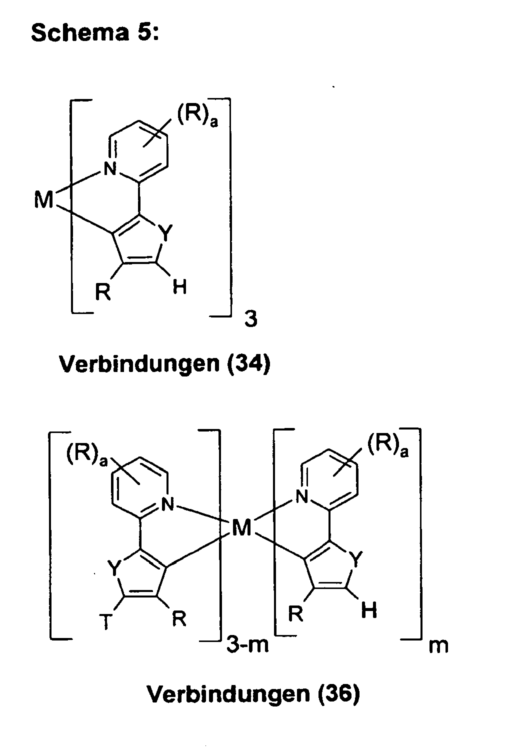 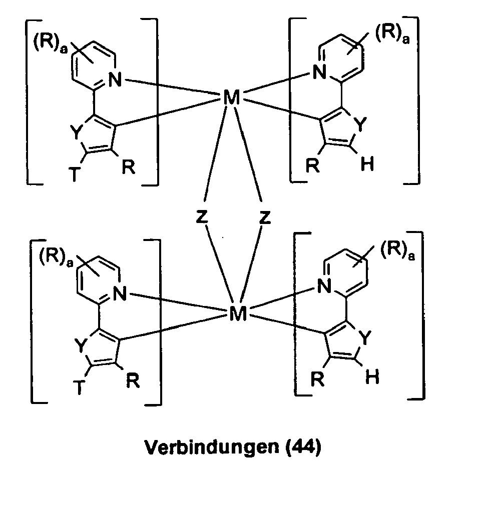 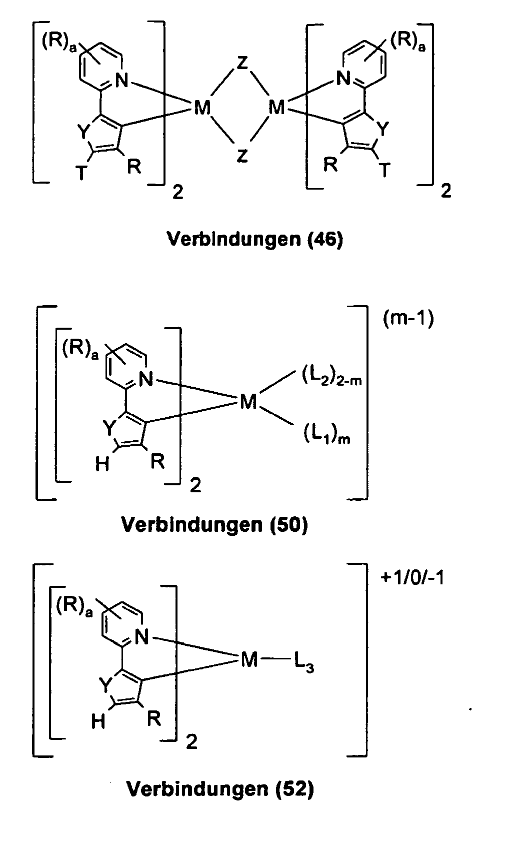 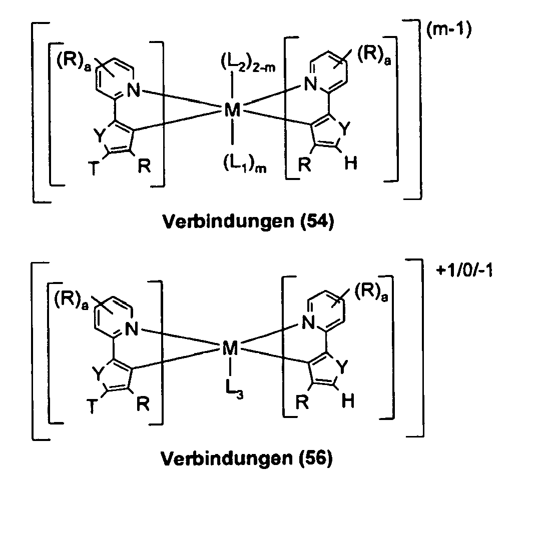 worin M und die Reste und Indizes Y, Z, R, T, R¹, L₁, L₂, L₃, a, b, c, m und p die oben genannten Bedeutungen haben, mit Nitrierungsagentien.

In völlig analoger Weise gehen die erfindungsgemäßen Verbindungen mit gemischtem Ligandensatz (2a) und (4a) aus den entsprechenden nicht nitrierten Ausgangsverbindungen mit gemischtem Ligandensatz, die hier im Einzelnen nicht graphisch dargestellt sind, hervor.

Die erfindungsgemäßen Verbindungen (2), (4), (2a), (4a), (10), (12), (18), (20), (22) und (24) zeichnen sich durch die folgenden Eigenschaften besonders aus:
1) Wie bereits beschrieben sind sie wertvolle Intermediate, da die Nitro-Gruppierung durch eine Vielzahl gängiger organischer Reaktionen in vielseitige Funktionen, wie z.B. die Amino-, Nitroso-, Hydroxylamino-, Azo-, Azoxy-Funktion, um nur einige Beispiele zu nennen, umgewandelt werden kann. Damit ist nicht nur ein Maßschneidern der physikalischen, elektrischen und optischen Eigenschaften dieser Rhodium- und Iridiumbausteine, sondern auch ein Einbinden dieser in eine Vielzahl von Polymeren, möglich.
2) Die Nitro-Gruppe nimmt am konjungierten System der Rhodium- bzw. Iridium-Komplexe teil, so daß sie einen maßgeblichen Einfluß auf die elektrischen und optischen Eigenschaften dieser Verbindungen hat. So können z.B. die Lage des HOMO und LUMO und damit das Oxidations- und Reduktionspotential, das Absorptiosspektrum, das Emissionsspektrum, die Triplettlebensdauer und die Triplettquantenausbeute, um nur einige Eigenschaften zu nennen, gezielt beeinflußt werden.
3) Die Nitro-Gruppe besitzt außerdem ein hohes Akzeptorpotential, so daß sich die erfindungsgemäßen Verbindungen hervorragend zu Ladungstrennung eigenen. Dieses Verhalten macht die erfindungsgemäßen Verbindungen unter anderem zu potentiellen Schlüsselbausteinen in photovoltaischen Vorrichtungen.

Das Verfahren wird durch Schema 6 exemplarisch an der Umsetzung der homoleptischen, tris-orthometallierten Verbindungen (34) und (36) zu den nitrierten, homoleptischen, tris-orthometallierten Verbindungen (2) und (4) erläutert, es gilt aber in dieser Form auch für die Umsetzung der heteroleptischen, tris-orthometallierten Verbindungen (34a) und (36a) und den bis-orthometallierten Verbindungen (44), (46), (50), (52), (54) und (56) zu den nitrierten, heteroleptischen, tris-orthometallierten Verbindungen (2a) und (4a) und den bis-orthometallierten Verbindungen (10), (12), (18), (20), (22) und (24), wobei stets die Verbindung (A+32 mit A = 1 bis 32) als Edukt zur Darstellung der Verbindung (A) dient.

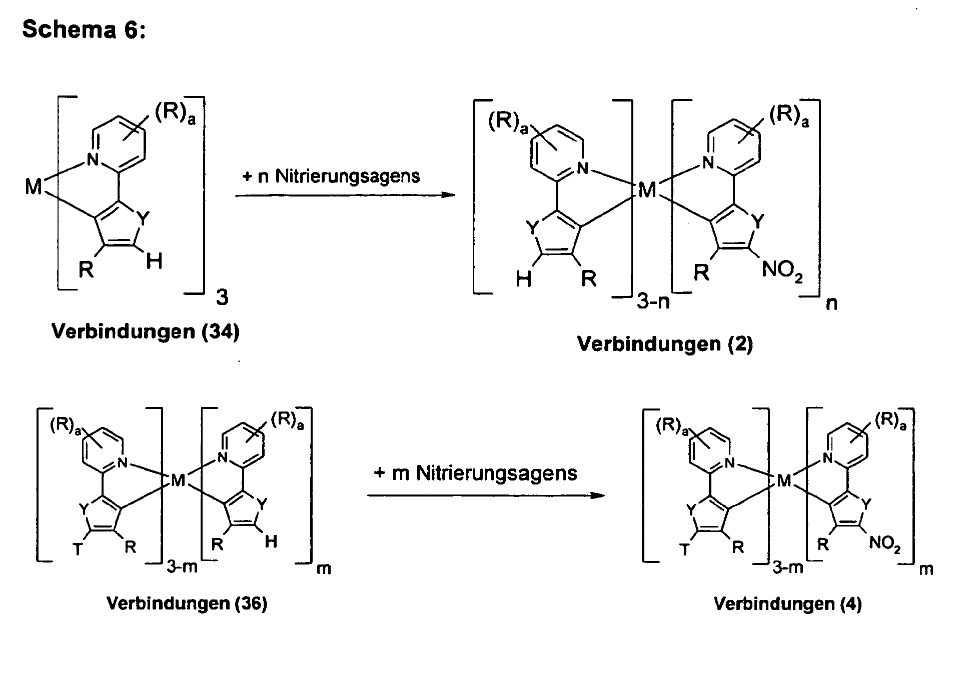

Erfindungsgemäße Nitrierungsagentien sind Salpetersäure, gegebenenfalls in Kombination mit einer weiteren Säure wie z.B. Schwefelsäure oder Phosphorsäure, Distickstofftetroxid, Distickstoffpentoxid, Nitroniumsalze des Typs NO₂A, wobei A ein geeignetes inertes Anion wie BF₄⁻, PF₆⁻, SbF₆⁻ oder CF₃SO₃⁻ ist, Alkali- oder Erdalkalinitrate wie Lithium-, Natrium-, Kaliumnitrat, Magnesiumnitrat, gegebenfalls in Gegenwart einer Säure wie Schwefelsäure, Phosphorsäure, Essigsäure, Propionsäure oder Trifluoressigsäure bzw. deren Mischungen und/oder eines Carbonsäureanhydrids wie Essigsäureanhydrid oder Propionsäureanhydrid, Übergangsmetallnitrate wie Eisen(II)-, Eisen(III)-, Kobalt(II)-, Kobalt(III)-, Nickel(II)- oder Kupfer(II)-nitrit oder -nitrat, gegebenfalls in Gegenwart einer Säure wie Schwefelsäure, Phosphorsäure, Essigsäure, Propionsäure oder Trifluoressigsäure und/oder eines Carbonsäureanhydrids wie Essigsäureanhydrid oder Propionsäureanhydrid bzw. deren Mischungen.

Die erfindungsgemäßen Nitrierungsagentien können in solche, die zu einer selektiven Nitierung der para-Positionen (entspricht der 5'-Stellung gemäß Schema 7) und solche, die zu einer Pernitrierung der ortho- und para-Positionen (entspricht den Positionen 3'und 5' bei Phenylpyridinliganden und den Positionen 4' und 5' bei den Thiophenylpyridinen gemäß Schema 7) führen, unterteilt werden.

Zu ersteren gehören verdünnte Salpetersäure und stöchiömetrisch eingesetzte Nitroniumsalze bzw. auch die Alkali- und Erdalkalinitrate in Organocarbonsäuren und deren Anhydride, insbesondere bei Temperaturen kleiner oder gleich Raumtemperatur.

Zu letzteren gehören konzentrierte Salpetersäure, gegebenenfalls in Kombination mit einer weiteren Säure, Nitroniumsalze und auch die Alkali- und Erdalkalinitrate in Organocarbonsäuren und deren Anhydride sofern sie in überstöchiometrischen Mengen und bei Temperaturen oberhalb von Raumtemperatur eingesetzt werden.

Im Verfahren führt ein stöchiometrisches Verhältnis der Nitrierungsagentien - bezogen auf den Gehalt an aktivem NO₂⁺ oder der entsprechenden nitrierenden Spezies - zur Verbindung (34) von 1 : 1 selektiv zur Verbindung (2) mit n = 1. Dies ist ein überraschendes und nicht vorhersehbares Ergebnis.

Im Verfahren führt ein stöchiometrisches Verhältnis der Nitrierungsungsagentien - bezogen auf den Gehalt an aktivem NO₂⁺ oder der entsprechenden nitrierenden Spezies - zur Verbindung (34) von 2:1 selektiv zur Verbindung (2) mit n = 2. Dies ist ein überraschendes und nicht vorhersehbares Ergebnis.

Im Verfahren führt ein stöchiometrisches Verhältnis der Nitrierungsagentien, die zur ausschließlichen para-Nitrierung führen, - bezogen auf den Gehalt an aktivem NO₂⁺ oder der entsprechenden nitrierenden Spezies - zur Verbindung (34) von 3 : 1 bis 1000 : 1 selektiv zur Verbindung (2) mit n = 3. Dies ist ein überraschendes und nicht vorhersehbares Ergebnis.

Im Verfahren führt ein stöchiometrisches Verhältnis der Nitrierungsagentien - bezogen auf den Gehalt an aktivem NO₂⁺ oder der entsprechenden nitrierenden Spezies - zur Verbindung (36) von 1 : 1 selektiv zur Verbindung (4) mit m = 1. Dies ist ein überraschendes und nicht vorhersehbares Ergebnis.

Im Verfahren führt ein stöchiometrisches Verhältnis der Nitrierungsungsagentien - bezogen auf den Gehalt an aktivem NO₂⁺ oder der entsprechenden nitrierenden Spezies - zur Verbindung (36) von 2 : 1 bis 1000 : 1 selektiv zur Verbindung (4) mit m = 2. Dies ist ein überraschendes und nicht vorhersehbares Ergebnis.

Die oben für die homoleptischen, tris-orthometalliereten Verbindungen beschriebenen stöchiometrischen Verhältnisse gelten in analoger Weise auch für die heteroleptischen, bis- und tris-orthometallierten Verbindungen und sind dem Fachmann ohne weiteres erfinderisches Zutun ersichtlich. Aus diesem Grund wird an dieser Stelle auf eine Beschreibung verzichtet.

Außerdem sind die hier beschriebenen stöchiometrischen Verhältnisse bevorzugte Ausführungsformen der vorliegenden Erfindung, da sie zu einheitlich substituierten Produkten führen. Es ist selbstverständlich, daß leichte Abweichungen von den o. g. Verhältnissen immer noch zu guten bis akzeptablen Ergebnissen führen.

Reaktionsmedien sind protische oder aprotische, halogenfreie oder halogenierte Lösemittel, so z.B. Carbonsäuren wie Essigsäure oder Propionsäure, Carbonsäureanhydride wie Essigsäureanhydrid oder Propionsäureanhydrid, Nitrile wie Acetonitril, Propionitril oder Benzonitril, Ether wie Diethylether, THF oder Dioxan, bezüglich der Nitrierung desaktivierte aromatische Kohlenwasserstoffe wie Benzonitril, Nitrobenzol oder Chlorbenzol, Sulfone wie Dimethylsulfon oder Sulfolan, halogenierte Kohlenwasserstoffe wie Dichlormethan, Trichlormethan, 1,1-Dichlorethan, 1,2-Dichlorethan, 1,1,2,2-Tetrachlorethan.

Die Umsetzung wird im Temperaturbereich von - 78°C bis 150°C, bevorzugt bei -30°C bis 100°C, ganz bevorzugt bei 0°C bis 60°C durchgeführt.

Die Konzentration der Rhodium-haltigen bzw. Iridium-haltigen Edukte - Verbindungen (34) bis (56) - liegt im Bereich von 0.0005 mol/l bis 2 mol/l, besonders bevorzugt im Bereich von 0.002 mol/l bis 0.1 mol/l.

Die Rhodium-haltigen bzw. Iridium-haltigen Edukte können gelöst oder suspendiert im Reaktionsmedium vorliegen.

Die Reaktion wird innerhalb von 10 Minuten bis zu 100 Stunden durchgeführt, bevorzugt innerhalb von 1 h bis 40 h.

Mit den hier erläuterten Synthesemethoden lassen sich unter anderem die im folgenden dargestellten Beispiele für erfindungsgemäße Verbindungen herstellen. 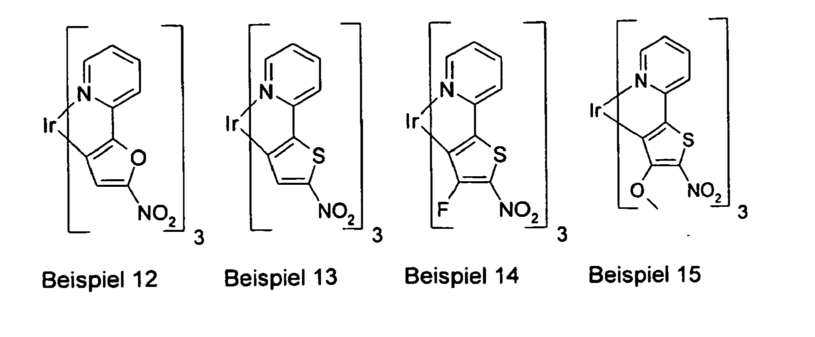 Die so erhaltenen erfindungsgemäßen Verbindungen können - gegebenenfalls nach weiterer Funktionalisierung - beispielsweise als Co-Monomere für Erzeugung entsprechender konjugierter oder auch teilkonjugierter oder nicht-konjugierter Polymere Verwendung finden. So können sie u. a in organischen Lösungsmitteln löslichen Polyfluorenen (z. B. gemäß EP-A-842208 oder WO 00/22026), Poly-spirobifluorenen (z. B. gemäß EP-894107), Poly-para-phenylenen (z. B. gemäß WO 92/18552), Poly-carbazolen oder auch Polythiophenen (z. B. gemäß EP-A-1028136) einpolymerisiert werden, wobei sie sowohl in der Polymerkette selbst, als auch als Endgruppe am Kettenende oder gegebenenfalls in Seitenketten des Polymers zu liegen kommen können. Die Verknüpfung der erfindungsgemäßen Verbindungen im Polymer erfolgt wie in Formel (4') dargestellt: 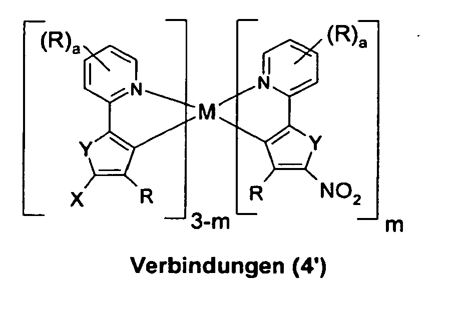 und/oder wie in Formel (4a') dargestellt: 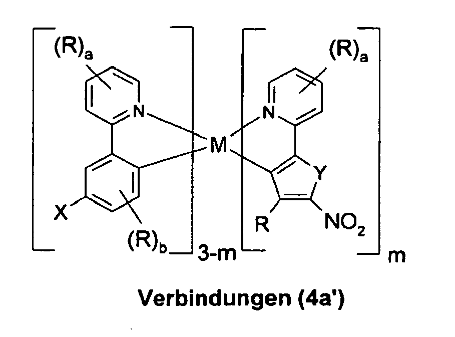 wobei X eine Anbindung zum konjugierten, teilkonjugierten oder nichtkonjugierten Polymer darstellt und die weiteren Symbole und Indizes dieselbe Bedeutung haben, wie oben für Verbindung (4) bzw. (4a) definiert.

Weiterhin kann die Verknüpfung der erfindungsgemäßen Verbindungen im Polymer auch erfolgen, wie in Formel (18'), (20'), (22') und/oder (24') dargestellt: 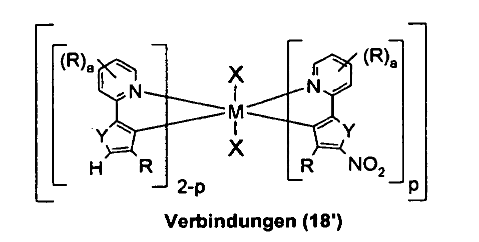 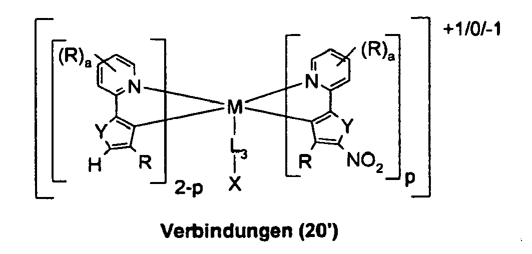 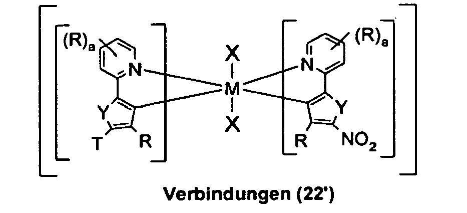 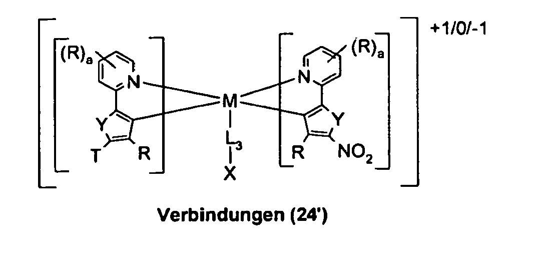 wobei X eine Anbindung zum konjugierten, teilkonjugierten oder nichtkonjugierten Polymer darstellt und die weiteren Symbole und Indizes dieselbe Bedeutung haben, wie oben für Verbindung (18), (20), (22) und (24) definiert.

Die erfindungsgemäßen Polymere zeichen sich durch ihre gute Löslichkeit von mindestens 0.1 Gew.-% in organischen aprotischen Lösungsmitteln, wie aromatischen Kohlenwasserstoffen so z.B. Toluol, Xylol, Anisol, Chlorbenzol, Naphthalin, Methylnaphthalin, Tetralin, wie Ethern, so z.B. Tetrahydrofuran und Dioxan, wie halogenierten Kohlenwasserstoffen, so z.B. Dichlormethan, Chloroform, 1,2-Dichlorethan, 1,1,2,2-Tetrachlorethan, wie Carbonsäureamiden, so z.B. Dimethylformamid, Dimethylacetamid und N-Methylpyrrolidon aus.

Die erfindungsgemäßen nitrosubstituierten Metallkomplexe und die erfindungsgemäßen Polymere, die erfindungsgemäße nitrosubstituierte Metallkomplexe enthalten, finden Verwendung als aktive Komponenten in elektronischen Bauteilen, wie z. B. organischen Leuchtdioden (OLEDs), organischen integrierten Schaltungen (O-ICs), organischen Feld-Effekt-Transistoren (O-FETs), organischen Dünnfilmtransistoren (O-TFTs), organischen Solarzellen (O-SCs) oder auch organische Laserdioden (O-Laser).

Gegenstand der Erfindung sind daher auch elektronische Bauteile, wie z. B. organische oder polymere Leuchtdioden (OLEDs oder PLEDs), organische integrierte Schaltungen (O-ICs), organische Feld-Effekt-Transistoren (O-FETs), organische Dünnfilmtransistoren (O-TFTs), organische Solarzellen (O-SCs) oder organische Laserdioden (O-Laser), enthaltend ein oder mehrere erfindungsgemäße nitrosubstituierte Metallkomplexe oder ein oder mehrere erfindungsgemäße Polymere, die ein oder mehrere erfindungsgemäße nitrosubstituierte Metallkomplexe enthalten.

Die erfindungsgemäßen Verbindungen können natürlich auch durch gängige organische Reaktionstypen weiter funktionalisiert werden, und so zu erweiterten niedermolekularen Rh- oder Ir-Komplexen umgesetzt werden. Hier ist als Beispiel die Reduktion der Nitrogruppen zu Amino-, Nitroso-, Hydroxylamino-, Azo- und Azoxy-Funktionen zu nennen.

Der Fachmann kann aus den Schilderungen ohne erfinderisches Zutun erfindungsgemäße Komplexe herstellen.

## Patentansprüche

1. Verbindungen gemäß Formel (2), (4), (2a), (4a), (10), (12), (18), (20), (22) und (24): 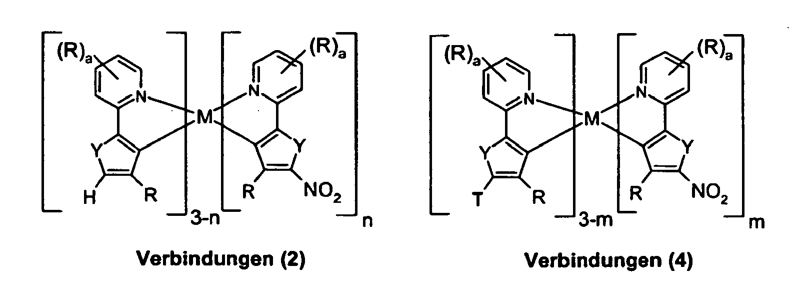 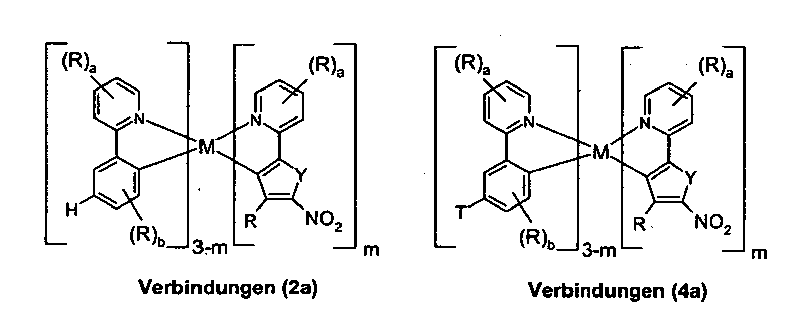 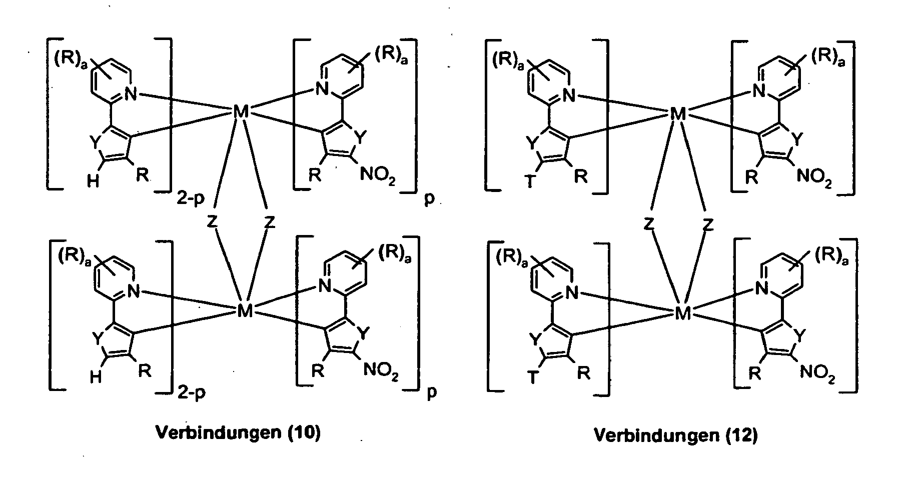 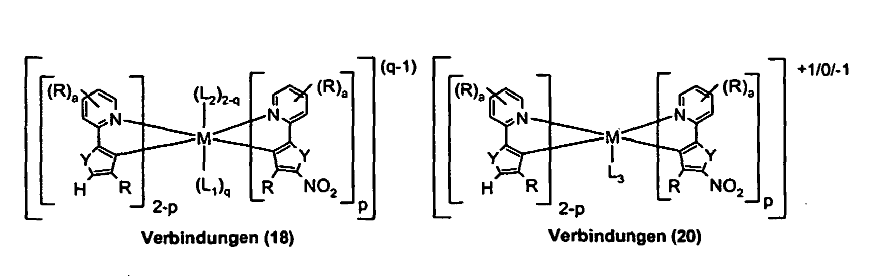 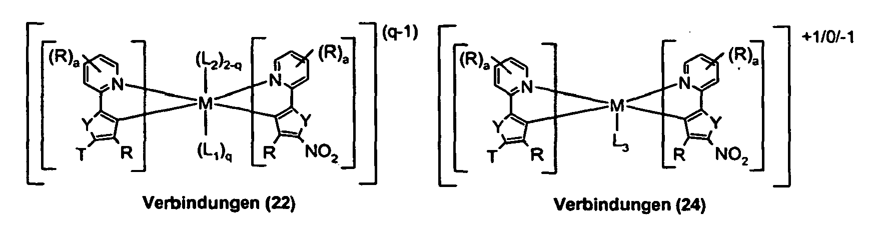 wobei die Symbole und Indizes folgende Bedeutung haben:
M ist Rh oder Ir;
Y ist O, S, Se oder NR¹;
Z ist gleich F, Cl, Br, I, O-R¹, S-R¹ oder N(R¹)₂;
R ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H- Atome durch F ersetzt sein können, oder eine Aryl- oder Hetero- arylgruppe mit 4 bis 14 C-Atomen, die durch einen oder mehrere nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ring- system aufspannen können;
T ist gleich oder verschieden bei jedem Auftreten F, Cl, Br, CN, eine geradkettige oder verzweigte oder cyclische Alkyl- oder Alkoxy- gruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H- Atome durch F ersetzt sein können, oder eine Aryl- oder Hetero- arylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ring- system aufspannen können;
R¹ ist gleich oder verschieden bei jedem Auftreten H oder ein aliphatischer oder aromatischer Kohlenwasserstoffrest mit 1 bis 20 C-Atomen;
L₁ ist ein neutraler, einzähniger Ligand;
L₂ ist ein monoanionischer, einzähniger Ligand;
L₃ ist ein neutraler oder mono- oder dianionischer zweizähniger Ligand;
a ist 0, 1, 2, 3 oder 4;
b ist 0, 1, 2 oder 3;
c ist 0, 1 oder 2;
m ist 1 oder 2;
n ist 1, 2 oder 3;
p ist 1 oder 2;
q ist 0, 1 oder 2.

2. Verbindungen nach Anspruch 1, **dadurch gekennzeichnet, dass** die neutralen, einzähnigen Liganden L₁ gewählt sind aus Kohlenmonoxid, Isonitrilen, Aminen, Phosphinen, Phosphiten, Arsinen, Stibinen und stickstoffhaltigen Heterocyclen.

3. Verbindungen nach Anspruch 1 oder 2, **dadurch gekennzeichnet, dass** die monoanionischen, einzähnigen Liganden L₂ gewählt sind aus den Halogeniden F, Cl, Br, I oder Cyanid, Cyanat, Iso-cyanat, Thiocyanat, Iso-thiocyanat, Alkoholaten, Thioalkoholaten, Amiden, Carboxylaten und anionischen, stickstoffhaltigen Heterocyclen.

4. Verbindungen nach Anspruch 1, **dadurch gekennzeichnet, dass** die neutralen oder mono- oder dianionischen zweizähnigen Liganden L₃ ausgewählt sind aus Diaminen, Iminen, Diminen, Heterocyclen enthaltend zwei Stickstoffatome, Diphosphinen, 1,3-Diketonaten abgeleitet von 1,3-Diketonen, 3-Ketonaten abgeleitet von 3-Ketoestern, Carboxylaten abgeleitet von Aminocarbonsäuren, Salicyliminaten abgeleitet von Salicyliminen, Dialkoholaten abgeleitet von Dialkoholen und Dithiolaten abgeleitet von Dithiolen.

5. Konjugierte, teilkonjugierte oder nicht-konjugierte Polymere enthaltend eine oder mehrere Verbindungen der Formel (4'), (4a'), (18'), (20'), (22') und/oder (24'), 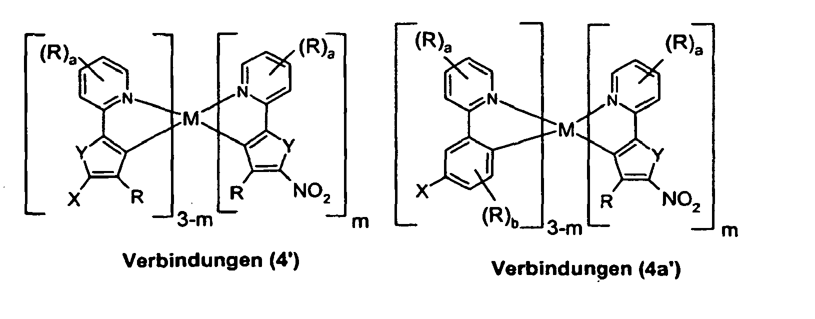 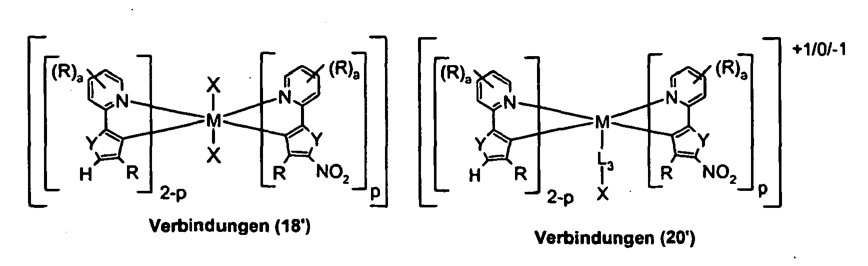 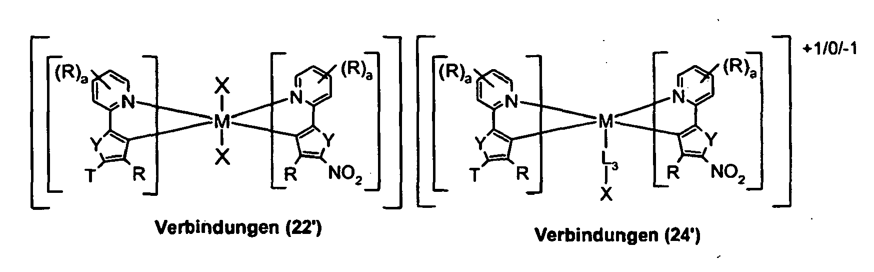 wobei die Symbole und Indizes die in Anspruch 1 genannte Bedeutung haben und weiterhin gilt:
X stellt eine Anbindung zum konjugierten, teilkonjugierten oder nicht- konjugierten Polymer dar.

6. Polymere nach Anspruch 5, **dadurch gekennzeichnet, dass** das Polymer Wiederholeinheiten entnommen aus Polyfluorenen, Polyspirobifluorenen, Poly-para-phenylenen, Poly-carbazolen oder Polythiophenen enthält.

7. Polymere nach Anspruch 5 oder 6, **dadurch gekennzeichnet, dass** das Polymer ein Copolymer ist.

8. Verwendung von Verbindungen nach einem oder mehreren der Ansprüche 1 bis 4 zur Herstellung der entsprechenden Amino-, Nitroso-, Hydroxylamino-, Azo- oder Azoxy-substituierten Verbindung und/oder als Zwischenverbindung zur Herstellung von Metallkomplexen, welche in organischen elektronischen Vorrichtungen eingesetzt werden.

9. Elektronisches Bauteil, enthaltend mindestens eine Verbindung nach einem oder mehreren der Ansprüche 1 bis 7.

10. Elektronisches Bauteil nach Anspruch 9, **dadurch gekennzeichnet, dass** es sich um organische Leuchtdioden (OLEDs), organische integrierte Schaltungen (O-Ics), organische Feld-Effekt-Transistoren (OFETs), organische Dünnfilmtransistoren (OTFTs), organische Solarzellen (O-SCs) oder organische Laserdioden (O-Laser) handelt.

## Claims

1. Compounds of the formulae (2), (4), (2a), (4a), (10), (12), (18), (20), (22) and (24): 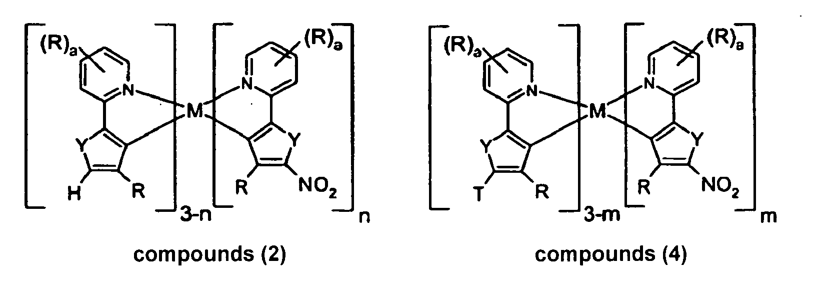 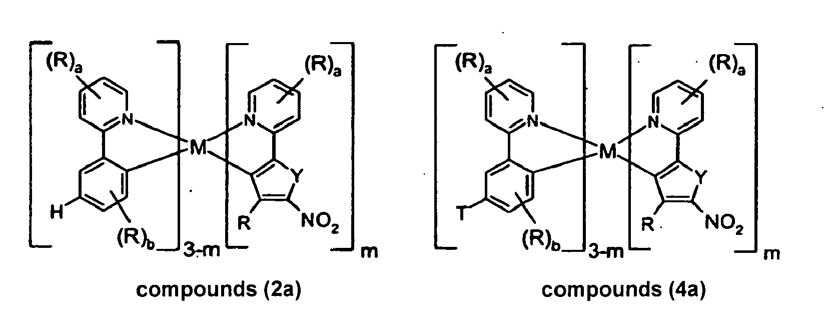 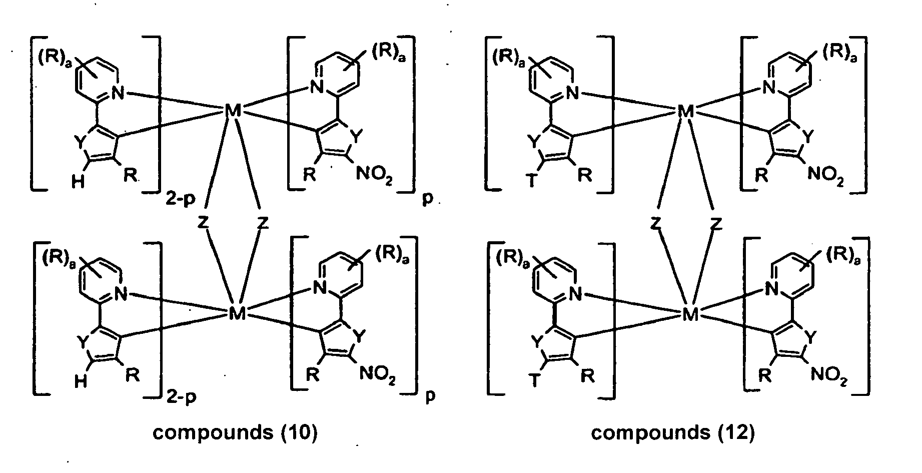 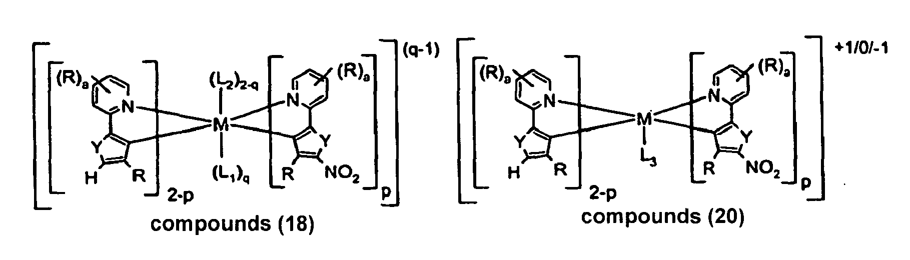 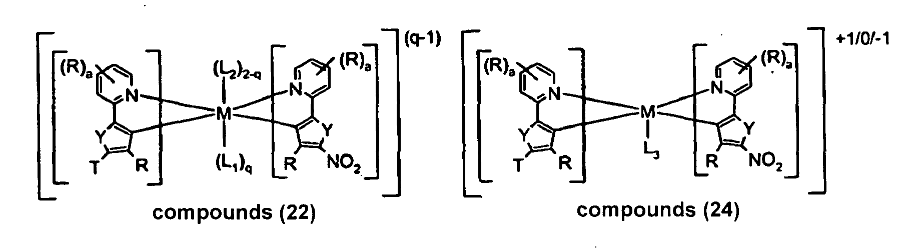 where the symbols and indices have the following meaning:
M is Rh or Ir;
Y is O, S, Se or NR¹;
Z is equal to F, Cl, Br, I, O-R¹, S-R¹ or N(R¹)₂;
R is, identically or differently on each occurrence, H, F, Cl, Br, CN, a straight-chain or branched or cyclic alkyl or alkoxy group having 1 to 20 C atoms, where one or more non-adjacent CH₂ groups may be replaced by -O-, -SiR¹₂-, -S-, -NR¹- or -CONR¹- and where one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn form a further aliphatic or aromatic, mono- or polycyclic ring system;
T is, identically or differently on each occurrence, F, Cl, Br, CN, a straight-chain or branched or cyclic alkyl or alkoxy group having 1 to 20 C atoms, where one or more non-adjacent CH₂ groups may be replaced by -O-, -SiR¹₂-, -S-, -NR¹- or -CONR¹- and where one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn form a further aliphatic or aromatic, mono- or polycyclic ring system;
R¹ is, identically or differently on each occurrence, H or an aliphatic or aromatic hydrocarbon radical having 1 to 20 C atoms;
L₁ is a neutral, monodentate ligand;
L₂ is a monoanionic, monodentate ligand;
L₃ is a neutral or mono- or dianionic bidentate ligand;
a is 0, 1, 2, 3 or 4;
b is 0, 1, 2 or 3;
c is 0, 1 or 2;
m is 1 or 2;
n is 1, 2 or 3;
p is 1 or 2;
q is 0, 1 or 2.

2. Compounds according to Claim 1, **characterised in that** the neutral, monodentate ligands L₁ are selected from carbon monoxide, isonitriles, amines, phosphines, phosphites, arsines, stibines and nitrogen-containing heterocycles.

3. Compounds according to Claim 1 or 2, **characterised in that** the monoanionic, monodentate ligands L₂ are selected from the halides F, Cl, Br, I or cyanide, cyanate, isocyanate, thiocyanate, isothiocyanate, alcoholates, thioalcoholates, amides, carboxylates and anionic, nitrogen-containing heterocycles.

4. Compounds according to Claim 1, **characterised in that** the neutral or mono- or dianionic bidentate ligands L₃ are selected from diamines, imines, diimines, heterocycles containing two nitrogen atoms, diphosphines, 1,3-diketonates derived from 1,3-diketones, 3-ketonates derived from 3-ketoesters, carboxylates derived from aminocarboxylic acids, salicyliminates derived from salicylimines, dialcoholates derived from dialcohols, and dithiolates derived from dithiols.

5. Conjugated, partially conjugated or non-conjugated polymers comprising one or more compounds of the formulae (4'), (4a'), (18'), (20'), (22') and/or (24'): 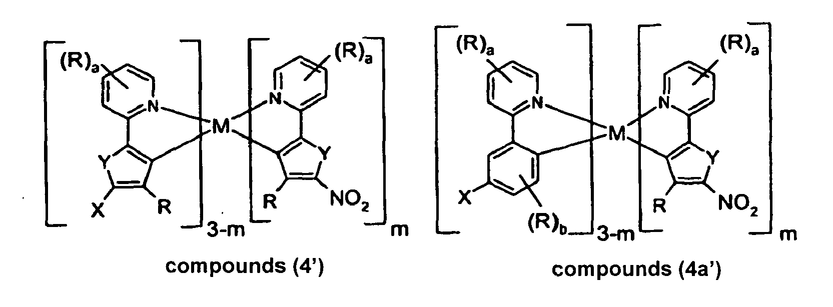 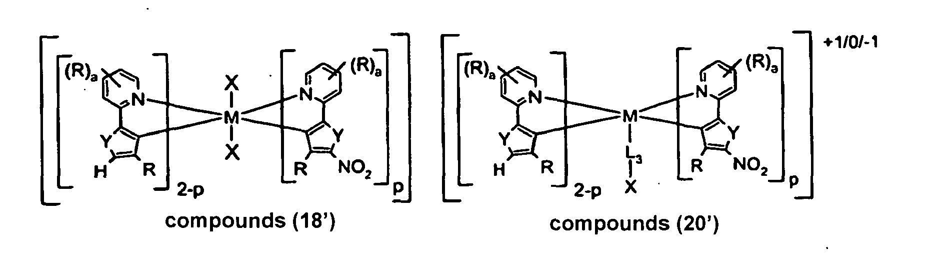 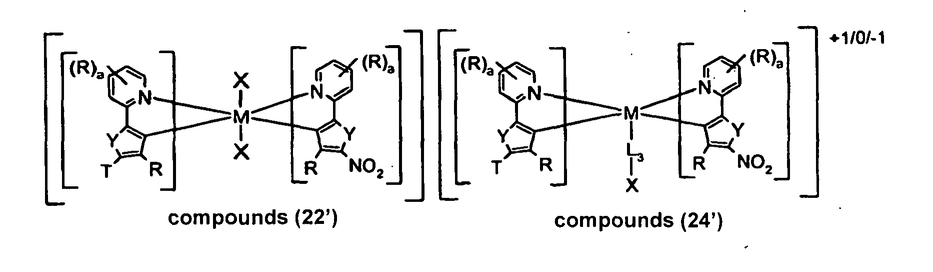 where the symbols and indices have the meaning given in Claim 1 and furthermore:
X represents a bond to the conjugated, partially conjugated or non- conjugated polymer.

6. Polymers according to Claim 5, **characterised in that** the polymer comprises recurring units taken from polyfluorenes, polyspirobifluorenes, poly-para-phenylenes, polycarbazoles or polythiophenes.

7. Polymers according to Claim 5 or 6, **characterised in that** the polymer is a copolymer.

8. Use of compounds according to one or more of Claims 1 to 4 for the preparation of the corresponding amino-, nitroso-, hydroxylamino-, azo- or azoxy-substituted compound and/or as intermediate compound for the preparation of metal complexes which are employed in organic electronic devices.

9. Electronic component comprising at least one compound according to one or more of Claims 1 to 7.

10. Electronic component according to Claim 9, **characterised in that** it relates to organic light-emitting diodes (OLEDs), organic integrated circuits (O-ICs), organic field-effect transistors (OFETs), organic thin-film transistors (OTFTs), organic solar cells (O-SCs) or organic laser diodes (O-lasers).

## Revendications

1. Composés des formules (2), (4), (2a), (4a), (10), (12), (18), (20), (22) et (24) : 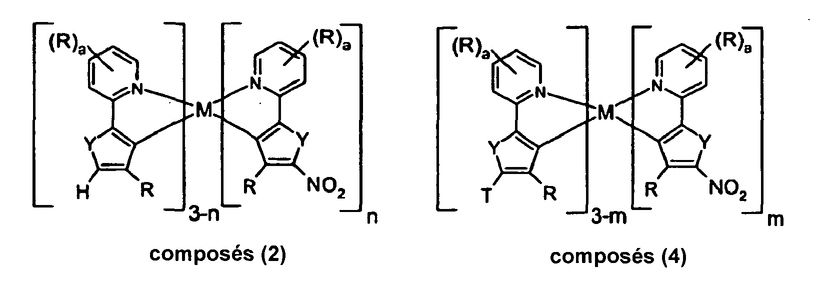 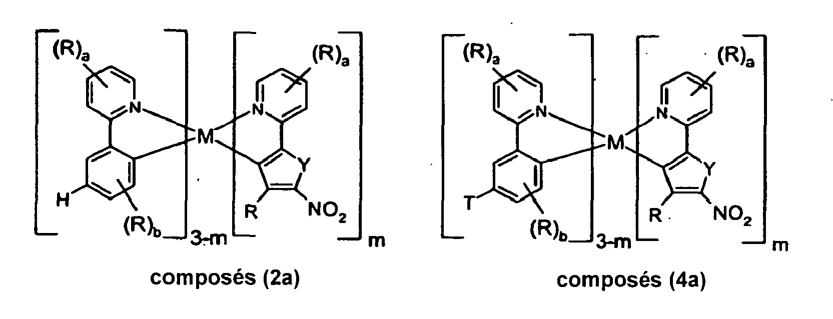 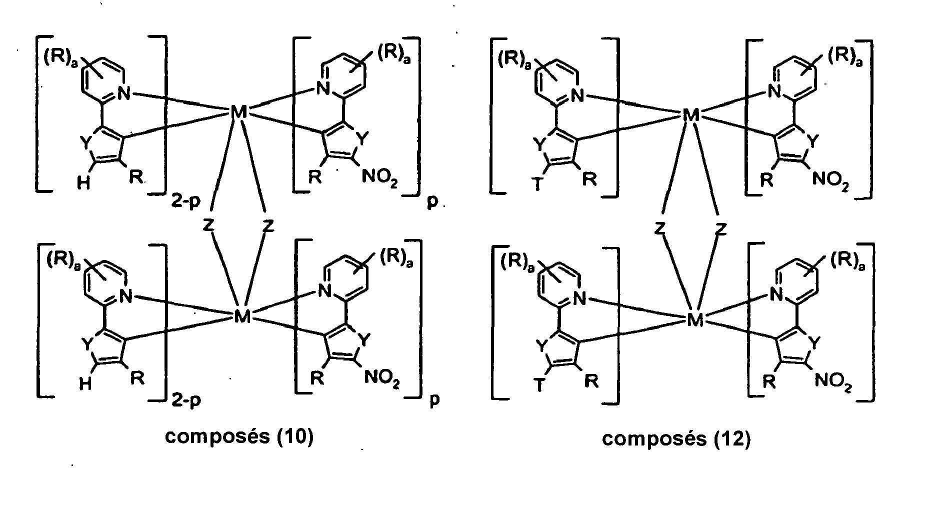 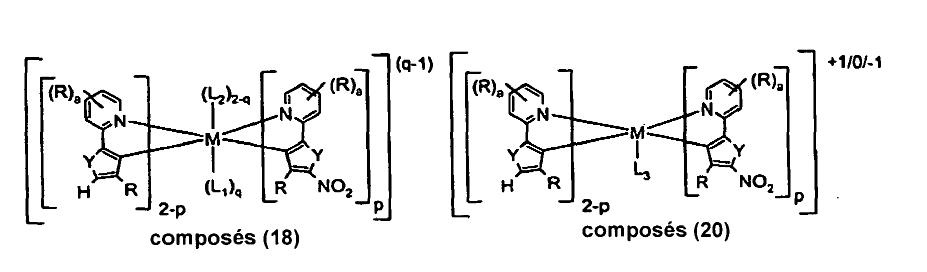 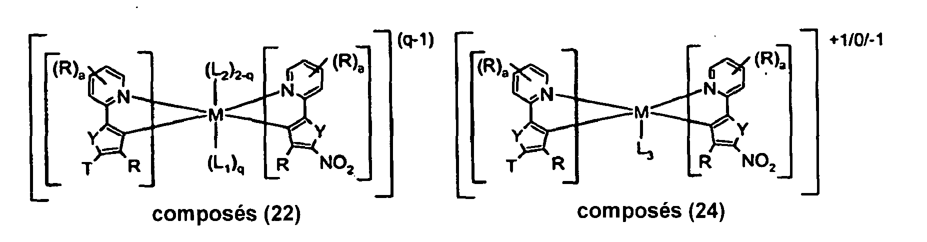 dans lesquelles les symboles et indices ont la signification suivante :
M est Rh ou Ir;
Y est O, S, Se ou NR¹;
Z est égal à F, CI, Br, I, O-R¹, S-R¹ ou N(R¹)₂ ;
R est, de façon identique ou différente à chaque occurrence, H, F, CI, Br, CN, un groupe alkyle ou alcoxy en chaîne droite, ramifié ou cyclique ayant 1 à 20 atomes de C, dans lequel un ou plusieurs groupes CH₂ non adjacents peuvent être remplacés par -O-, -SiR¹₂-, -S-, -NR¹- ou -CONR¹- et dans lequel un ou plusieurs atomes de H peuvent être remplacés par F, ou un groupe aryle ou hétéroaryle ayant 4 à 14 atomes de C, qui peut être substitué par un ou plu- sieurs radicaux non aromatiques R, dans lequel une pluralité de substituants R, tous sur le même cycle et également sur les deux cycles différents, peuvent ensemble à leur tour former un autre sys- tème de cycle mono- ou polycyclique aliphatique ou aromatique ;
T est, de façon identique ou différente à chaque occurrence, F, CI, Br, CN, un groupe alkyle ou alcoxy en chaîne droite, ramifié ou cyclique ayant 1 à 20 atomes de C, dans lequel un ou plusieurs groupes CH₂ non adjacents peuvent être remplacés par -O-, -SiR¹₂-, -S-, -NR¹- ou -CONR¹- et dans lequel un ou plusieurs atomes de H peuvent être remplacés par F, ou un groupe aryle ou hétéroaryle ayant 4 à 14 atomes de C, qui peuvent être substitués par un ou plusieurs radi- caux non aromatiques R, dans lequel une pluralité de substituants R, tous sur le même cycle et également sur les deux cycles différents, peuvent ensemble à leur tour former un autre système de cycle mono- ou polycyclique aliphatique ou aromatique ;
R¹ est, de façon identique ou différente à chaque occurrence, H ou un radical hydrocarbone aliphatique ou aromatique ayant 1 à 20 atomes de C;
L₁ est un ligand monodenté neutre ;
L₂ est un ligand monodenté monoanionique ;
L₃ est un ligand bidenté neutre ou mono- ou dianionique ;
a est 0, 1, 2, 3 ou 4 ;
b est 0, 1, 2 ou 3 ;
c est 0, 1 ou 2 ;
m est 1 ou 2 ;
n est 1, 2 ou 3 ; p est 1 ou 2;
q est 0, 1 ou 2 .

2. Composés selon la revendication 1, **caractérisés en ce que** les ligands monodentés neutres L₁ sont choisis parmi monoxyde de carbone, isonitriles, amines, phosphines, phosphites, arsines, stibines et hétérocycles contenant azote.

3. Composés selon la revendication 1 ou 2, **caractérisés en ce que** les ligands monodentés mono-anioniques L₂ sont choisis parmi les halogénures F, CI, Br, I ou cyanure, cyanate, isocyanate, thiocyanate, isothiocyanate, alcoolates, thioalcoolates, amides, carboxylates et hétérocycles contenant azote anioniques.

4. Composés selon la revendication 1, **caractérisés en ce que** les ligands bidentés neutres ou mono- ou dianioniques L₃ sont choisis parmi diamines, imines, diimines, hétérocycles contenant deux atomes d'azote, diphosphines, 1,3-dicétonates dérivés de 1,3-dicétones, 3-cétonates dérivés de 3-cétoesters, carboxylates dérivés d'acides aminocarboxyliques, salicyliminates dérivés de salicylimines, dialcoolates dérivés de dialcools, et dithiolates dérivés de dithiols.

5. Polymères conjugués, partiellement conjugués ou non conjugués comprenant un ou plusieurs composés des formules (4'), (4a'), (18'), (20'), (22') et/ou (24') : 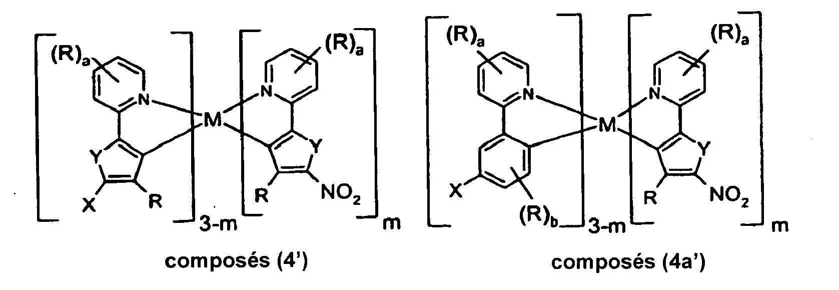 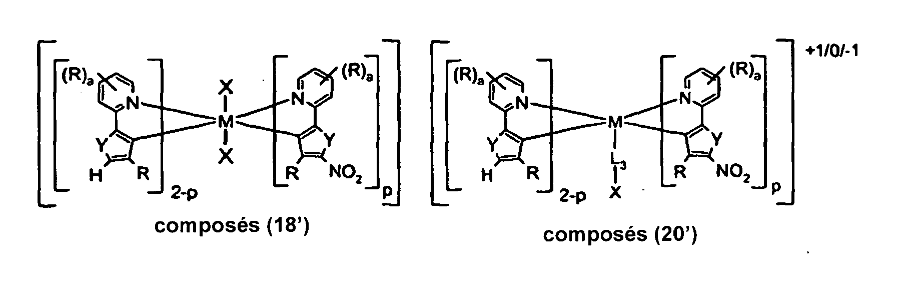 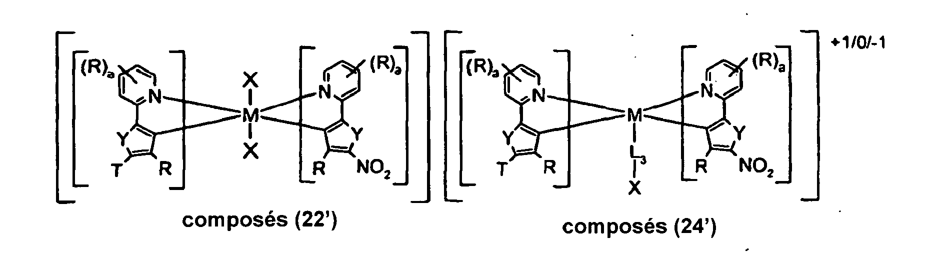 dans lesquels les symboles et indices ont la signification donnée dans la revendication 1 et en outre :
X représente une liaison au polymère conjugué, partiellement conjugué ou non conjugué.

6. Polymères selon la revendication 5, **caractérisés en ce que** le polymère comprend des unités récurrentes prises parmi polyfluorènes, polyspirobifluorènes, poly-para-phénylènes, polycarbazoles ou polythiophènes.

7. Polymères selon la revendication 5 ou 6, **caractérisés en ce que** le polymère est un copolymère.

8. Utilisation de composés selon une ou plusieurs des revendications 1 à 4 pour la préparation du composé substitué avec amino, nitroso, hydroxylamino, azo ou azoxy correspondant et/ou en tant que composé intermédiaire pour la préparation de complexes de métal qui sont employés dans des dispositifs électroniques organiques.

9. Composant électronique comprenant au moins un composé selon l'une des revendications 1 à 7.

10. Composant électronique selon la revendication 9, **caractérisé en ce qu'**il se rapporte à des diodes émettrices de lumière organiques (OLEDs), des circuits intégrés organiques (O-ICs), des transistors à effet de champ organiques (OFETs), des transistors à film mince organiques (OTFTs), des cellules solaires organiques (O-SCs) ou des diodes laser organiques (O-lasers).
